# EUROPEAN PATENT SPECIFICATION

(11) **EP 2 502 875 B1**
(45) Date of publication and mention of the grant of the patent: **14.05.2014**
(21) Application number: 11382079.9
(22) Date of filing: 24.03.2011
(51) Int. Cl.: B67B 3/20, H02K 49/10, H02K 21/02

(54) **Magnetic clutch**
Magnetische Kupplung
Embrayage magnétique

(43) Date of publication of application: 26.09.2012
(73) Proprietor: Antonio Mengibar, S.A., 08191 Bubi ( Barcelona) (ES)
(72) Inventor: Mengibar Rivas, Antonio, 08191, BARCELONA (ES)
(74) Representative: Carvajal y Urquijo, Isabel

(56) References cited:
- EP-A1- 1 186 873
- DE-A1-102009 039 658
- US-B2- 6 941 724

## Description

### Object of the invention

The present invention relates to a hybrid magnetic clutch for the transmission of tightening torque, which combines the advantages and benefits of the hysteresis magnetic clutches and the magnetic synchronous clutches.

The present invention has been especially designed for its application in the industrial sector in general, being particularly appropriate in the packaging industry to close containers that use screw caps, and more generally for any application that requires tightening torque.

### Background of the invention

The magnetic clutches for the transmission of tightening torque are frequently used in the packaging industry, one of its more usual applications being its use for screwing caps on container necks.

Said clutches usually consist of a body, or casing, that is associated with a first shaft, which normally acts as a driving shaft on which an external rotation force is applied. In the interior of said casing there is a second shaft, coaxial to the first shaft, which is fixed to the casing by mechanical means that allow its free rotation movement relative thereto. The second shaft, or driven shaft, is drawn by magnetic attraction to finally generate tightening torque on one of its ends, on which there are clamping means for the cap to be screwed. The various ways of adjusting and regulating tightening torque have yielded several designs for this type of magnetic clutches.

Some of these solutions are based on the use of magnetic synchronous clutches. One example of these is seen in US 6,941,724 which discloses a magnetic clutch in accordance with the preamble of claim 1, in particular corresponding to a clutch for screwing capping heads that use two concentric opposite rings of permanent magnets with alternating polarity (where "permanent magnets" refers to those magnets that present high resistance to demagnetization, also known as "hard magnets"). Each one of said magnets rings are associated with one of the driving and driven shafts, so that when the driving shaft rotates, the driven shaft is synchronically drawn due to the attraction force between the opposite pole magnets and the repulsion between equal poles. The attraction/repulsion force between the magnets could be adjusted according to the type of container to be used. This is achieved by screwing/unscrewing an adjustment neck associated with a lower part of the driven shaft. The movement of the adjustment neck generates an axial displacement, without rotation, of the magnet ring associated with the driven shaft. Thus the axial distance between both magnet rings is modified, allowing a decrease or increase of the facing surface between them in radial direction. When the resistance to the movement of the screw cap is greater than the drawing force on the driven shaft, this slips and stops following the movement of the driving shaft. When the driven shaft slips a hammering effect is produced, since the permanent magnets of both shafts look for stable positions, which are produced when the magnets of opposite poles face each other. The hammering helps to close the cap better, thanks to the intermittent force peaks that are generated during it, as it enables to unblock undesired positions between the cap and the container neck when these are jammed together. By contrast, the hammering may produce gripping failures of the elements that clamp the cap, making them slide on it and thus damaging it, as well as undesired vibrations that generate greater wear on the clutch components.

Other solutions used are based on the use of hysteresis magnetic clutches. An example of these can be seen in US5,996,311 corresponding to a device for screwing caps on containers, which uses a hysteresis ring facing a group of circular permanent magnets of alternating polarity. The hysteresis ring, formed by a low magnetic reluctance material (also known as "soft magnets"), is associated with the driving shaft, while the group of permanent magnets are associated with the driven shaft. When the driving shaft rotates, the permanent magnets associated with the driven shaft tend to continuously change the polarity of the ring and a drawing movement of said driven shaft is produced. When the resistance to the movement of the screw cap is greater than the drawing force on the driven shaft, this slips and stops following the movement of the driving shaft. The drawing force may be adjusted according to the type of container to be used, pre-setting some pre-established working positions in which the hysteresis ring and the permanent magnets are at different distances in axial direction, allowing a decrease or increase of the facing surface between them in radial direction. In order to achieve this pre-adjustment, the casing, housing the hysteresis ring, may be arranged on a limited number of predetermined machined positions on the driving shaft that vary their relative position in axial direction relative to the driven shaft. Unlike magnetic synchronous clutches, when the driven shaft slips, a soft movement is produced. Hence, by avoiding the hammering, the damage on the cap and the wear of the components of the clutch are prevented. While by contrast, as no intermittent force peaks are produced, the cap may either remain improperly closed or be blocked in an undesired position of the container neck. Besides, the force density of a hysteresis clutch is always lower than that of a synchronous clutch. That is, for the same clutch size, the synchronous technology allows obtaining a tightening torque greater than the one obtained with the hysteresis technology.

The present invention comprises a hybrid magnetic clutch that uses both magnetic technologies described above, enabling to solve the problems presented by each one of them while obtaining all their advantages. In this sense, the hybrid magnetic clutch of the present invention enables to regulate the slip between the shafts, making this happen in a soft way with a slight hammering.

### Description of the invention

In order to solve the aforementioned problems, the magnetic clutch for the transmission of tightening torque of the present invention comprises a first shaft integral to a casing in whose interior there is a second shaft coaxial to the first shaft. Said second shaft is fixed to the casing by mechanical means that allow its free rotation movement relative thereto, being both shafts engaged together by magnetic attraction to transmit the tightening torque. The configuration described above maintains the symmetry principle, being it possible for each one of the shafts to independently act as a driving shaft or a driven shaft.

The magnetic clutch in turn comprises:
- a first magnetic assembly, linked to one of the shafts, formed by:
   o a first group of magnets of high magnetic coercivity arranged with alternating polarities;
      and:
- a second magnetic assembly, linked to the remaining shaft and concentric to the first magnetic assembly, formed by:
   o a low magnetic coercivity magnet; and
   o a second group of high magnetic coercivity magnets, arranged with alternating polarities and adjacent in axial direction to the low magnetic coercivity magnet;
      where:
- the first magnetic assembly and the second magnetic assembly present a facing surface in radial direction.

The magnetic coercivity represents the magnetic field value necessary to eliminate the magnetization of a ferromagnetic material, and therefore it also represents the resistance of a magnet to demagnetization. A high magnetic coercivity implies demagnetization values equal to or higher than 0.20 T, such as for example those offered by rare earth magnets such as Neodymium or Samarium, having coercivities of 1,20 T and 1 T respectively, or other ferrite magnets, having mean coercivities of 0.25 T. In turn, a low magnetic coercivity implies demagnetization values lower than 0.20 T, such as for example Alnico alloys, having a coercivity of approximately 0.07 T. Hard magnets are characterized by presenting high magnetic coercivity values, while soft magnets are characterized by presenting low magnetic coercivity values.

By means of the configuration described above, the present invention enables to place the first and second magnetic assembly in a desired position, according to the type of cap to be used and/or to the necessary tightening torque, type of container etc., in which some particular slipping conditions are produced. That is, the position between the first and second magnetic assembly is adjusted to offer a more or less soft slide and a more or less slight hammering. Although the adjustment principle is mainly based on varying the facing surface in radial direction between both assemblies.

In this sense, according to a first preferred embodiment of the present invention, both magnetic assemblies present a displacement movement relative to each other in axial direction, configured to progressively increase or decrease the facing surface between the magnets of both assemblies, progressively varying from a simple hysteresis magnetic clutch position to a mixed magnetic hysteresis clutch and magnetic synchronous clutch position, and vice versa. Thus, the simple position comprises the first group of high magnetic coercivity magnets facing only the low magnetic coercivity magnet, while the mixed position comprises the first group of high magnetic coercivity magnets facing both the low magnetic coercivity magnet and the second group of high magnetic coercivity magnets.

There exist various designs for placing each one of the magnetic assemblies on their corresponding shafts, thus linking the movements of each one of them. According to a first preferred embodiment of the present invention, the first magnetic assembly is arranged on the inner face of the casing, in a way that is concentric to the first shaft, while the second magnetic assembly is arranged on the outer face of the second shaft in a way that is concentric thereto. Preferably, the first magnetic assembly is arranged to slip axially on the inner face of the casing, while the second magnetic assembly is fixed on the outer face of the second shaft.

The mechanical means that allow for the free movement of one of the shafts relative to the other also offer various design variants. According to a first preferred embodiment of the present invention, said mechanical means comprise the use of bearings that keep the second shaft and the casing joined.

### Brief description of the drawings

There follows a very brief description of a series of drawings that will help understand the invention better relating to a preferred embodiment of said invention presented as a non-limiting example thereof.
Figure 1 represents an elevation view of the magnetic clutch of the present invention, according to a first preferred embodiment, in which the simple clutch position is shown.
Figure 2 represents an elevation view of the magnetic clutch of the present invention, according to a first preferred embodiment, in which the mixed clutch position is shown.
Figure 3 represents a plan view according to the cutting line A-A of Figure 2.
Figure 4 represents a plan view according to the cutting line B-B of Figure 2.

### Preferred embodiment of the invention

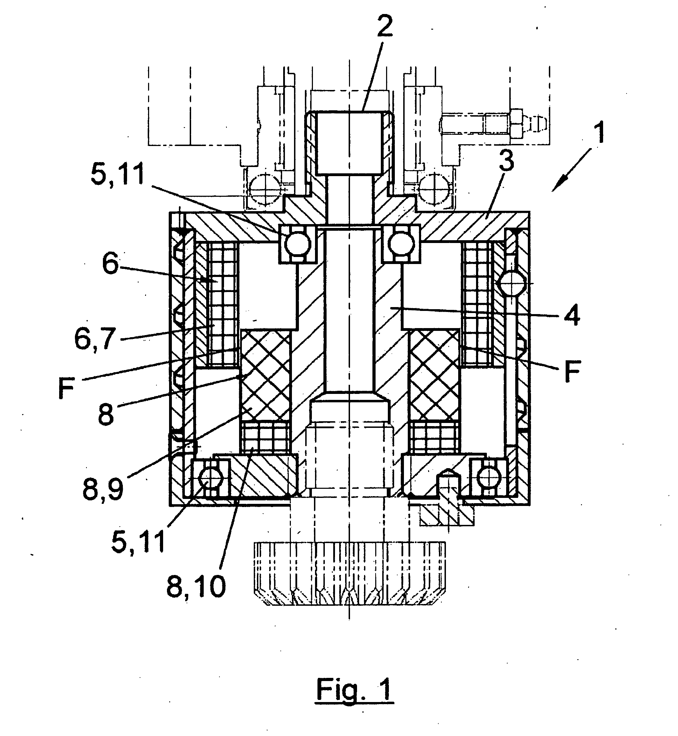

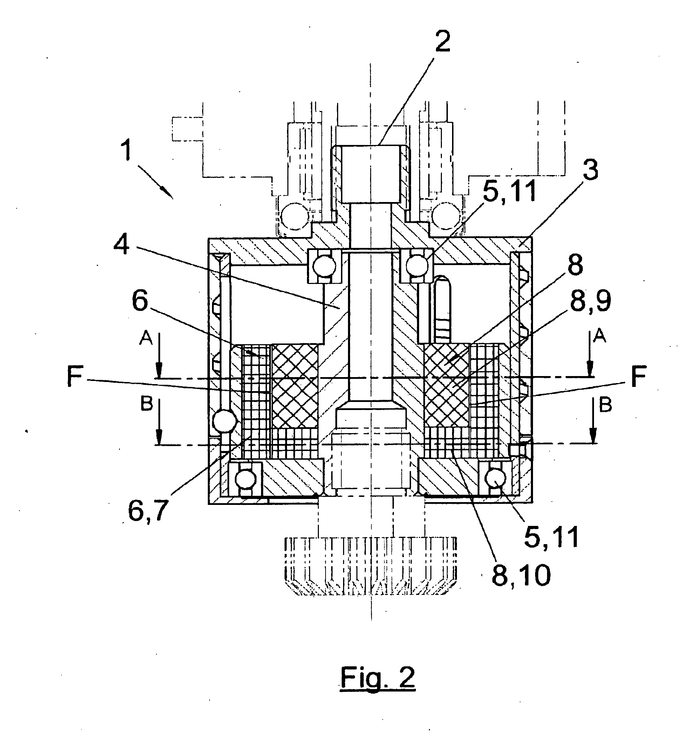

Figures 1 and 2 show an elevation view of the magnetic clutch of the present invention, according to a first preferred embodiment, in which the simple clutch position and the mixed clutch position are shown respectively.
In these figures it can be seen that the magnetic clutch (1) for the transmission of tightening torque of the present invention comprises a first shaft (2) integral to a casing (3) in whose interior there is a second shaft (4) coaxial to the first shaft (2). Said second shaft (4) is fixed to the casing (3) by mechanical means (5) that allow its free rotation movement relative thereto, being both shafts (2, 4) engaged together by magnetic attraction to transmit tightening torque.

The magnetic clutch (1) comprises in turn a first and a second magnetic assembly (6, 8). In the present embodiment example, the first magnetic assembly (6) is linked to the first shaft (2), which acts as a driving shaft, while the second magnetic assembly (8) is linked to the second shaft (4), which acts as a driven shaft.

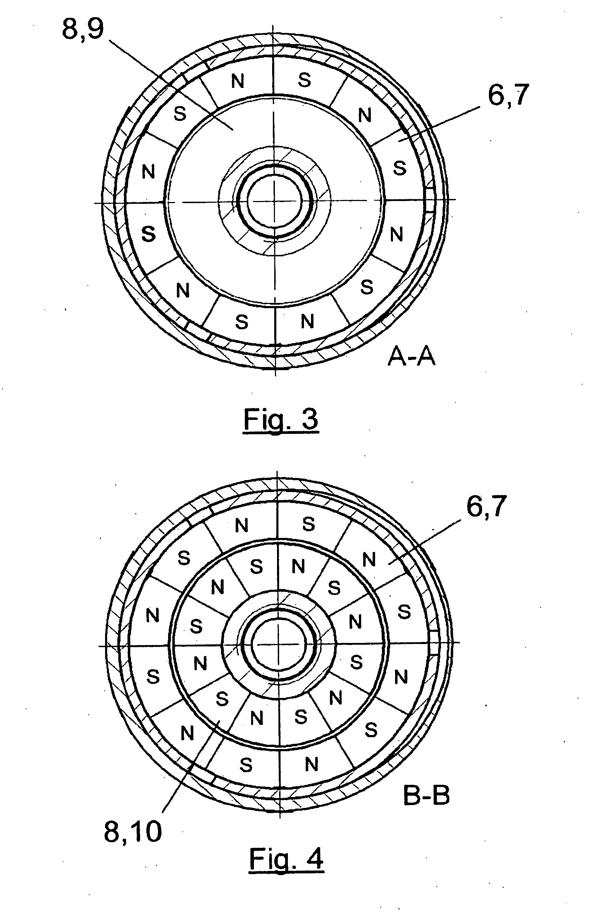

As it can be seen the first magnetic assembly (6) is formed by a first group of magnets (7) of high magnetic coercivity, arranged with alternating polarities, figures 3 and 4. Besides, the second magnetic assembly (8) is arranged in a way that is concentric to the first magnetic assembly (6) and is formed by a magnet (9) of low magnetic coercivity and by a second group of magnets (10) of high magnetic coercivity. The second group of magnets (10) is adjacent in axial direction to the magnet (9) and their polarities are also alternating, figures 3 and 4. Finally, it can be also seen that the first magnetic assembly (6) and the second magnetic assembly (8) present a facing surface (F) in radial direction.

There exist various designs for placing each one of the magnetic assemblies (6, 8) on their corresponding shaft, thus linking the movements of each other. According to the present example, the first magnetic assembly (6) is arranged on the inner face of the casing (3), in a way that is concentric to the first shaft (2), while the second magnetic assembly (8) is arranged on the outer face of the second shaft (4) in a way that is concentric thereto.

In the present embodiment example both magnetic assemblies (6, 8) present an axial displacement relative movement with respect to each other. Specifically, the first magnetic assembly (6) is configured to axially slide on the inner face of the casing (3), while the second magnetic assembly (8) is fixed on the outer face of the second shaft (4). Said movement is configured to progressively increase or decrease the facing surface (F) between the magnets (7, 9, 10) of both assemblies (6, 8), switching from a simple hysteresis magnetic clutch position to a mixed hysteresis magnetic clutch and a magnetic synchronous clutch position, and vice versa.

Figures 1 and 2 reflect the two extreme working positions of the magnetic clutch (1), and how these are associated to the facing surface (F). Specifically, figure 1 shows the simple magnetic clutch position, in which the tightening torque is minimal. As it can be seen, the simple position comprises the first group of magnets (7) of high magnetic coercivity partially facing the magnet (9) of low magnetic coercivity, being the facing surface (F) minimal between them. In turn, figure 2 shows the mixed magnetic clutch position, in which the tightening torque is at its maximum. As it can be seen, the mixed position comprises the first group of magnets (7) of high magnetic coercivity completely facing the magnet (9) of low magnetic coercivity and the second group of magnets (10) of high magnetic coercivity.

The mechanical means (5) that enable the free movement of one of the shafts relative to the other, according to the present example, comprise the use of bearings (11) that keep the second shaft (4) and the casing (3) joined.

Figures 3 and 4 show a plan view according to the section line A-A and according to the section line B-B of figure 2, respectively. In these figures, it can be seen in greater detail how the magnetic assemblies (6, 8) are arranged inside the magnetic clutch (1) and the alternating distribution of the polarities of the first and second group of magnets (7, 10).

## Claims

1. Magnetic clutch for the transmission of tightening torque, where said clutch (1) comprises a first shaft (2) integral to a casing (3) in whose interior there is a second shaft (4) coaxial to the first shaft (2), where said second shaft (4) is fixed to the casing (3) by mechanical means (5) that allow for its free rotation movement relative thereto, where said shafts (2, 4) are engaged together by magnetic attraction to transmit torque, said clutch (1) is **characterized in that** it comprises:
• a first magnetic assembly (6), linked to one of the shafts (2, 4), formed by:
o a first group of magnets (7) of high magnetic coercivity arranged with alternating polarities;
• a second magnetic assembly (8), linked to the remaining shaft (2, 4) and concentric to the first magnetic assembly (6), formed by:
o a low magnetic coercivity magnet (9); and
o a second group of high magnetic coercivity magnets (10), arranged with alternating polarities and adjacent in axial direction to the low magnetic coercivity magnet (9);
where:
• the first magnetic assembly (6) and the second magnetic assembly (8) present a facing surface (F) in radial direction.

2. Magnetic clutch for the transmission of tightening torque according to claim 1 **characterized in that** both magnetic assemblies (6, 8) present an axial displacement relative movement with respect to each other, configured to progressively increase or decrease the facing surface (F) between the magnets (7, 9, 10) of both assemblies (6, 8), progressively varying from a simple hysteresis magnetic clutch position to a mixed magnetic hysteresis clutch and magnetic synchronous clutch position, and vice versa.

3. Magnetic clutch for the transmission of tightening torque according to claim 2 **characterized in that**:
• the simple position comprises the first group of magnets (7) facing only the magnet (9); and
• the mixed position comprises the first group of magnets (7) facing the magnet (9) and the second group of magnets (10).

4. Magnetic clutch for the transmission of tightening torque according to any of preceding claims 1 to 3 **characterized in that**:
• the first magnetic assembly (6) is arranged on the inner face of casing (3), in a way that is concentric to the first shaft (2); and
• the second magnetic assembly (8) is arranged on the outer face of the second shaft (4) in a way that is concentric thereto.

5. Magnetic clutch for the transmission of tightening torque according to any of preceding claims 2 to 4 **characterized in that**:
• the first magnetic assembly (6) is configured to axially slide on the inner face of the casing (3); and
• the second magnetic assembly (8) is fixed on the outer face of the second shaft (4).

6. Magnetic clutch for the transmission of tightening torque according to any of the preceding claims 1 to 5 **characterized in that** the mechanical means (5) comprise the use of bearings (11) that keep the second shaft (4) and the casing (3) joined.

7. Magnetic clutch for the transmission of tightening torque according to any of the preceding claims 1 to 6 **characterized in that** the first group of magnets (7) and the second group of magnets (10) with high magnetic coercivity comprise the use of materials that present magnetic coercivities equal to or higher than 0.20 T.

8. Magnetic clutch for the transmission of tightening torque according to any of the preceding claims 1 to 7 **characterized in that** the magnet (9) with low magnetic coercivity comprises the use of materials with magnetic coercivities lower than 0.20 T.

## Patentansprüche

1. Magnetkupplung zur Übertragung eines Anzugsdrehmoments, wobei die genannte Kupplung (1) eine erste Welle (2) umfasst, die in einem Gehäuse (3) aufgenommen ist, in dessen Inneren sich eine zweite Welle (4) befindet, welche koaxial zur ersten Welle (2) ist, wobei die genannte zweite Welle (4) an dem Gehäuse (3) durch mechanische Mittel (5), die eine freie Drehbewegung derselbigen zu diesem erlauben, befestigt ist, wobei die genannten Wellen (2, 4) durch eine magnetische Anziehung zur Übertragung des Drehmoments miteinander verbunden sind, wobei die genannte Kupplung (1) **dadurch gekennzeichnet ist, dass** sie Folgendes umfasst:
• eine erste Magnetanordnung (6), die mit einer der beiden Wellen (2, 4) verbunden ist, welche durch Folgendes gebildet ist:
• eine erste Gruppe von Magneten (7) mit hoher magnetischer Koerzitivkraft, die mit wechselnder Polarität angeordnet sind;
• eine zweite Magnetanordnung (8), welche mit der verbleibenden Welle (2, 4) verbunden und konzentrisch zu der ersten Magnetanordnung (6) ist, welche durch Folgendes gebildet ist:
• einen Magnet (9) mit niedriger magnetischer Koerzitivkraft; und
• eine zweite Gruppe von Magneten (10) mit hoher magnetischer Koerzitivkraft, die mit wechselnder Polarität und in axialer Richtung zu dem Magneten (9) mit niedriger magnetischer Koerzitivkraft benachbart angeordnet sind;
wobei:
• die erste Magnetanordnung (6) und die zweite Magnetanordnung (8) eine sich gegenüberliegende Fläche (F) in radialer Richtung aufweisen.

2. Magnetkupplung zur Übertragung eines Anzugsdrehmoments nach Anspruch 1, **dadurch gekennzeichnet, dass** beide Magnetanordnungen (6, 8) eine relative Bewegung mit axialem Versatz zueinander aufweisen, welche derart ausgebildet ist, dass sie die gegenüberliegende Fläche (F) zwischen den Magneten (7, 9, 10) beider Anordnungen (6, 8) zunehmend vergrößert oder verkleinert, wobei sie zunehmend von einer einfachen Hysterese-Magnetkupplungsposition zu einer gemischten Hysterese-Magnetkupplungs- und Magnetsynchronkupplungsposition und umgekehrt übergeht.

3. Magnetkupplung zur Übertragung eines Anzugsdrehmoments nach Anspruch 2, **dadurch gekennzeichnet, dass**:
• die einfache Position beinhaltet, dass die erste Gruppe von Magneten (7) lediglich dem Magneten (9) gegenüberliegt; und
• die gemischte Position beinhaltet, dass die erste Gruppe von Magneten (7) dem Magneten (9) und der zweiten Gruppe von Magneten (10) gegenüberliegt.

4. Magnetkupplung zur Übertragung eines Anzugsdrehmoments nach einem der Ansprüche 1 bis 3, **dadurch gekennzeichnet, dass**:
• die erste Magnetanordnung (6) auf der Innenseite des Gehäuses (3) angeordnet ist, so dass sie zur ersten Welle (2) konzentrisch ist; und
• die zweite Magnetanordnung (8) auf der Außenseite der zweiten Welle (4) angeordnet ist, so dass sie zu dieser konzentrisch ist.

5. Magnetkupplung zur Übertragung eines Anzugsdrehmoments nach einem der vorherigen Ansprüche 2 bis 4, **dadurch gekennzeichnet, dass**:
• die erste Magnetanordnung (6) derart ausgebildet ist, dass sie axial auf der Innenseite des Gehäuses (3) gleitet; und
• die zweite Magnetanordnung (8) auf der Außenseite der zweiten Welle (4) befestigt ist.

6. Magnetkupplung zur Übertragung eines Anzugsdrehmoments nach einem der vorherigen Ansprüche 1 bis 5, **dadurch gekennzeichnet, dass** die mechanischen Mittel (5) die Verwendung von Lagern (11) umfassen, welche die zweite Welle (4) und das Gehäuse (3) zusammenhalten.

7. Magnetkupplung zur Übertragung eines Anzugsdrehmoments nach einem der vorherigen Ansprüche 1 bis 6, **dadurch gekennzeichnet, dass** die erste Gruppe von Magneten (7) und die zweite Gruppe von Magneten (10) mit hoher magnetischer Koerzitivkraft die Verwendung von Materialien mit magnetischen Koerzitivkräften von 0,20 T oder mehr umfassen.

8. Magnetkupplung zur Übertragung eines Anzugsdrehmoments nach einem der vorherigen Ansprüche 1 bis 7, **dadurch gekennzeichnet, dass** der Magnet (9) mit niedriger magnetischer Koerzitivkraft die Verwendung von Materialien mit magnetischen Koerzitivkräften von unter 0,20 T umfasst.

## Revendications

1. Embrayage magnétique pour la transmission d'un couple de serrage, dans lequel ledit embrayage (1) comprend un premier arbre (2) solidaire d'un boîtier (3) à l'intérieur duquel il y a un deuxième arbre (4) coaxial au premier arbre (2), dans lequel ledit deuxième arbre (4) est fixé au boîtier (3) par des moyens mécaniques (5) qui permettent son mouvement de rotation libre par rapport à celui-ci, dans lequel lesdits arbres (2, 4) sont engagés ensemble par attraction magnétique pour transmettre un couple, ledit embrayage (1) est **caractérisé en ce qu'**il comprend :
• un premier ensemble magnétique (6), relié à l'un des arbres (2, 4), formé par :
o un premier groupe d'aimants (7) à forte coercivité magnétique aménagés avec des polarités alternées ;
• un second ensemble magnétique (8), relié à l'arbre restant (2, 4) et concentrique au premier ensemble magnétique (6), formé par :
o un aimant de faible coercivité magnétique (9), et
o un deuxième groupe d'aimants à forte coercivité magnétique (10), agencés avec des polarités alternées et adjacentes dans la direction axiale à l'aimant à faible coercivité magnétique (9) ;
dans lequel :
• le premier ensemble magnétique (6) et le second ensemble magnétique (8) présentent une surface en vis-à-vis (F) dans la direction radiale.

2. Embrayage magnétique pour la transmission d'un couple de serrage selon la revendication 1, **caractérisé en ce que** les deux ensembles magnétiques (6, 8) présentent un mouvement relatif de déplacement axial de l'un par rapport à l'autre, configuré pour augmenter ou diminuer progressivement la surface en vis-à-vis (F) entre les aimants (7, 9, 10) des deux ensembles (6, 8), variant progressivement à partir d'une position simple d'embrayage magnétique à hystérésis à une position mixte d'embrayage d'hystérésis magnétique et une position d'embrayage synchrone magnétique, et vice versa.

3. Embrayage magnétique pour la transmission d'un couple de serrage selon la revendication 2, **caractérisé en ce que** :
• la position simple comprend le premier groupe d'aimants (7) en faisant uniquement face à l'aimant (9) ; et
• la position mixte comprend le premier groupe d'aimants (7) faisant face à l'aimant et le deuxième groupe d'aimants (10).

4. Embrayage magnétique pour la transmission d'un couple de serrage selon l'une quelconque des revendications précédentes 1 à 3, **caractérisé en ce que** :
• le premier ensemble magnétique (6) est aménagé sur la face interne du boîtier (3), de façon qu'il soit concentrique au premier arbre (2) ; et
• le deuxième ensemble magnétique (8) est aménagé sur la face externe du deuxième arbre (4), de façon qu'il soit concentrique à celui-ci

5. Embrayage magnétique pour la transmission d'un couple de serrage selon l'une quelconque des revendications précédentes 2 à 4, **caractérisé en ce que** :
• le premier ensemble magnétique (6) est configuré pour glisser axialement sur la face interne du boîtier (3) ; et
• le deuxième ensemble magnétique (8) est fixé sur la face externe du deuxième arbre (4).

6. Embrayage magnétique pour la transmission d'un couple de serrage selon l'une quelconque des revendications précédentes 1 à 5, **caractérisé en ce que** les moyens mécaniques (5) comprennent l'utilisation de paliers (11) qui maintiennent le deuxième arbre (4) et le boîtier (3) reliés.

7. Embrayage magnétique pour la transmission d'un couple de serrage selon l'une quelconque des revendications précédentes 1 à 6, **caractérisé en ce que** le premier groupe d'aimants (7) et le deuxième groupe d'aimants (10) à forte coercivité magnétique comprennent l'utilisation d'un matériau qui présente une coercivité magnétique égale ou supérieure à 0,20 T.

8. Embrayage magnétique pour la transmission d'un couple de serrage selon l'une quelconque des revendications précédentes 1 à 7, **caractérisé en ce que** l'aimant (9) à faible coercivité magnétique comprend l'utilisation d'un matériau dont la coercivité magnétique est inférieure à 0,20 T.
